(19) Europäisches Patentamt
European Patent Office
Office européen des brevets

(11) Veröffentlichungsnummer : **0 354 183 B1**

(12) # EUROPÄISCHE PATENTSCHRIFT

(45) Veröffentlichungstag der Patentschrift : **20.01.93 Patentblatt 93/03**

(51) Int. Cl.[5] : **A01N 43/653,**
// (A01N43/653, 43:36)

(21) Anmeldenummer : **89810573.9**

(22) Anmeldetag : **26.07.89**

(54) **Mikrobizide Mittel.**

(30) Priorität : **04.08.88 CH 2961/88**

(43) Veröffentlichungstag der Anmeldung : **07.02.90 Patentblatt 90/06**

(45) Bekanntmachung des Hinweises auf die Patenterteilung : **20.01.93 Patentblatt 93/03**

(84) Benannte Vertragsstaaten : **AT BE CH DE ES FR GB GR IT LI LU NL SE**

(56) Entgegenhaltungen :
**EP-A- 0 126 430**
**EP-A- 0 235 082**

(56) Entgegenhaltungen :
**BRIGHTON CROP PROTECTION CONFERENCE - PESTS AND DISEASES, Nr. 1, 1988, Seiten 65-72, British Crop Protection Councel,Thornton Heath, GB; D. NEVILL et al.: "CGA 142705: A novel fungicide for seed treatment"**
**RESEARCH DISCLOSURE, Nr. 292, August 1988, Seite 625, Offenbarung Nr. 29280, Kenneth Mason Publications Ltd, Emsworth, GB;N.N.: "Microbiological combination to protect plants"**

(73) Patentinhaber : **CIBA-GEIGY AG**
**Klybeckstrasse 141**
**CH-4002 Basel (CH)**

(72) Erfinder : **Nevill, David John, Dr.**
**Rebenstrasse 40**
**CH-4125 Riehen (CH)**
Erfinder : **Steck, Bernhard**
**Im Marcoup 9**
**CH-3286 Muntelier (CH)**

**EP 0 354 183 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft mikrobizide Gemische mit synergistisch gesteigerter Wirkung gegen Pflanzenkrankheiten und Verfahren zur Anwendung solcher Gemische, insbesondere zur Saatbeizung.

Die Erfindung bezieht sich insbesondere auf die Bekämpfung bzw. Verhütung von Krankheiten im Getreide-Anbau.

Es wurde gefunden, dass eine Kombination der Wirkstoff-Komponente I), 3-Cyano-4-(2,3-dichlorphenyl)-pyrrol ("Fenpiclonil") der Formel I

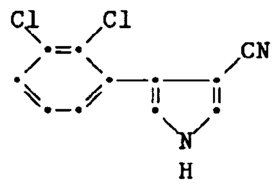

(I)

mit der Wirkstoff-Komponente II), 1-(1H-1,2,4-Triazol-1-yl)-2-methoxy-2-[4-(4-chlorphenoxy)-2-chlorphenyl]-butan der Formel II

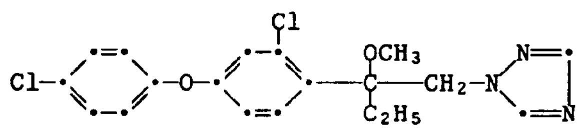

(II)

oder mit einem ihrer Salze zu einer synergistisch gesteigerten Aktivität bei der Bekämpfung und Verhütung von Pflanzenkrankheiten führt.

Die Verbindung der Formel I wird in der DE-OS 2,927,480 (bzw. in der GB-Patentanmeldung 2,024,824) unter anderen Zwischenprodukten genannt. Ihre Verwendung als fungizide Aktivsubstanz wird in der EP-A 236272 beschrieben. Sie zeichnet sich vor allem als Kontaktfungizid aus.

Die Verbindung der Formel II ist als fungizide Aktivsubstanz in der Europäischen Patentanmeldung 126 430 beschrieben. Die Wirkung dieses Triazolderivates beruht auf der Hemmung der Ergosterin-Biosynthese.

Die erwähnten Salze der Verbindung der Formel II können durch Umsetzung der Base mit Säuren hergestellt werden.

Unter den Säuren, die zur Herstellung von Salzen der Formel II verwendet werden können, sind zu nennen: Halogenwasserstoffsäure wie Fluorwasserstoffsäure, Chlorwassserstoffsäure, Bromwasserstoffsäure oder Jodwasserstoffsäure sowie Schwefelsäure, Phosphorsäure, Salpetersäure und organische Säuren wie Essigsäure, Trifluoressigsäure, Trichloressigsäure, Propionsäure, Glycolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure, 2-Acetoxybenzoesäure oder 1,2-Naphthalin-disulfonsäure.

Der Begriff Salze schliesst auch Metallkomplexe der basischen Komponente II ein. Diese Komplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen Kobalt, Nickel, Kupfer, Zink usw. Bevorzugt sind die Nebengruppen-Elemente der 4. Periode. Die Metalle können dabei in den verschiedenen ihnen zukommenden Wertigkeiten vorliegen. Die Metallkomplexe können ein- oder mehrkernig auftreten, d.h. sie können ein oder mehrere organische Molekülanteile als Liganden enthalten.

Es ist dem Fachmann bekannt, dass die Wirkung einer fungiziden Aktivsubstanz durch den Zusatz eines anderen Fungizids mit unterschiedlichem Wirkungsspektrum weitgehend gesteigert oder erweitert werden kann.

Ueberraschend wurde aber gefunden, dass die Kombination der Wirkstoffe I und II zu einer ganz unerwartet hohen Wirkungssteigerung gegen saatbürtige und bodenbürtige Pilze führt. Die durch die erfindungsgemässe Kombination erzielte Wirkungssteigerung ist mit Abstand grösser als die durch Addition der Aktivitäten der beiden einzelnen Komponenten zu erwartende Aktivität, das heisst es wirkt synergistisch.

Ausser der synergistischen fungiziden Wirkung zeigen die erfindungsgemässen Gemische eine ausgeprägte pflanzenwachstumfördernde Wirkung, welche von der Zusammensetzung des erfindungsgemässen Gemisches etwa im gleichen Masse abhängt, wie die fungizide Wirkung. Demnach kann die pflanzenwachstumfördernde Wirkung des erfindungsgemässen Gemisches auch als synergistisch bezeichnet werden.

Die vorliegende Erfindung ermöglicht damit die Samenbeizung mit geringeren Mengen an Bioziden, als es vorher bekannt war, und stellt damit eine ganz wesentliche Bereicherung der Technik dar.

Günstige Mischungsverhältnisse der beiden Wirkstoffe sind I:II = 20:1 bis 1:20, besonders I:II = 10:1 bis 1:10 und ganz besonders I:II = 5:1 bis 1:5. Andere vorteilhafte Mischungsverhältnisse sind I:II = 2:1 bis 1:2 oder 5:2 bis 2:3 oder 3:2 bis 1:1.

Die Kombination der Aktivkomponenten I und II gemäss der vorliegenden Erfindung haben nützliche Kontaktwirkung sowie systemische und Dauerwirkung bei der Bekämpfung der saat- und bodenbürtigen Pflanzenkrankheiten. Durch die erfindungsgemässen Kombinationen werden die Mikroorganismen am Saatgut zerstört und die sich in Entwicklung befindlichen Pflanzen werden vor dem Angriff der bodenbürtigen Mikroorganismen geschützt.

Die erfindungsgemässen Gemische sind gegen phytopathogene Pilze aktiv, welche den folgenden Klassen angehören: Ascomycetes (z.B. die Gattungen Mycosphaerella, Pyrenophora); Basidiomycetes (z.B. die Gattungen Tilletia, Rhizoctonia); Fungi imperfecti (z.B. die Gattungen Fusarium, Septoria, Phoma, Alternaria). Die erfindungsgemässen Kombinationen sind insbesondere bei der Saatbehandlung (Frucht, Knollen, Körner) wirksam, die Wirkung auf Fusarium nivale auf Weizen ist besonders ausgeprägt. Sie eignen sich jedoch ebenfalls für die direkte Behandlung des Bodens oder anderer Pflanzenteile. Sie weisen eine gute Pflanzenverträglichkeit auf und sind ökologisch unbedenklich.

Bei seiner Verwendung wird das erfindungsgemässe Gemisch normalerweise zusammen mit den in der Formulierungstechnik üblichen Hilfsmitteln eingesetzt. Die Aktivkomponenten der Formeln I und II werden z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, auch zu Enkapsulierung in z.B. polymeren Stoffen in bekannter Weise verarbeitet. Die Anwendungsverfahren wie Versprühen, Vernebeln, Verstäuben, Verstreuen, Bestreichen oder Giessen und die Form des Mittels werden den angestrebten Zielen und den gegebenen Verhältnissen angepasst. Günstige Aufwandmengen liegen im allgemeinen bei je 0,0005 bis höchstens 0,5 kg, insbesondere je 0,001-0,01 kg, Aktivsubstanz I und II pro 100 kg zu schützendes Gut. Die Applikationsbedingungen hängen jedoch ganz wesentlich von der Beschaffenheit (Grösse der Oberfläche, Konsistenz, Feuchtigkeitsgehalt) des Gutes und dessen Umgebungseinflüssen ab.

Unter Lager- und Vorratsgütern und insbesondere unter Saatgut sollen im Rahmen vorliegender Erfindung pflanzliche Naturstoffe und deren Weiterverarbeitungsprodukte verstanden werden, beispielsweise die nachfolgend aufgezählten und aus dem natürlichen Lebenszyklus herausgenommenen Pflanzen, deren Pflanzenteile (Stengel, Blätter, Knollen, Samen, Früchte, Körner), die im frisch geernteten Zustand oder in weiterverarbeitbarer Form vorliegen (vorgetrocknet, befeuchtet, zerkleinert, gemahlen, geröstet etc.).

Als Zielkulturen gelten im Rahmen dieser Erfindung beispielsweise folgende Pflanzenarten: Getreide: (Weizen, Gerste, Roggen, Hafer, Reis, Sorghum, Mais und Verwandte); Rüben (Zucker- und Futterrüben); Hülsenfrüchte: (Bohnen, Linsen, Soja, Erbsen); Oelkulturen: (Raps, Senf, Mohn, Sonnenblumen); Gurkengewächse: (Gurken, Kürbis, Melonen); Fasergewächse: (Baumwolle, Flachs); Gemüsesorten: (Kopfsalat, Kohlarten, Spinat, Möhren, Zwiebeln, Tomaten, Kartoffeln, Paprika); Zierpflanzen: (Tulpen, Osterglocken, Dahlien, Chrysanthemen und andere Blumen) sowie Gewürzkräuter und ihre Samen.

Ein bevorzugtes Verfahren zum Aufbringen des erfindungsgemässen Gemisches besteht in einem Besprühen oder Benetzen des Pflanzenmaterials mit einer flüssigen Aufbereitung oder im Vermischen des Pflanzenmaterials mit einer festen Aufbereitung der Aktivsubstanz. Das beschriebene Konservierungs-Verfahren ist ein Teil der vorliegenden Erfindung.

Die Wirkstoffe der Formeln I und II werden erfindungsgemäss in Form von Zusammensetzungen verwendet und können zusammen mit gegebenenfalls weiteren in der Formulierungstechnik üblichen Trägerstoffen, Tensiden oder anderen applikationsfördernden Zusätzen eingesetzt werden.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Dünge-mitteln. Besonders vorteilhafte Zusatzstoffe sind Phospholipide.

Ein bevorzugtes Verfahren zur Applikation eines Gemisches von Wirkstoffen der Formeln I und II bzw. eines (agro)chemischen Mittels, das diese Wirkstoffe enthält, ist das Aufbringen auf das Blattwerk (Blattapplikation). Anzahl der Applikationen und Aufwandmenge richten sich dabei nach dem Befallsdruck für den entsprechenden Erreger (Pilzsorte). Das Wirkstoffgemisch kann aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt, z.B. in Form von Granulat

(Boden-applikaton). Das Gemisch der Verbindungen der Formeln I und II kann nach einem besonders bevorzugten Verfahren auch auf Samenkörner, Knollen, Früchte oder sonstiges zu schützendes Pflanzenmaterial aufgebracht werden (Coating), indem man das Pflanzenmaterial entweder mit einer flüssigen Zubereitung der Wirkstoffe tränkt oder mit einer festen Zubereitung beschichtet. Darüber hinaus sind in besonderen Fällen weitere Applikationsarten möglich, so z.B. die gezielte Behandlung der Pflanzenstengel oder der Knospen.

Die Verbindungen der Formeln I und II werden dabei in unveränderter Form oder vorzugsweise zusammen mit den in der Formulierungstechnik üblichen Hilfsmittel eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, auch zu Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen liegen bei Feld-Behandlung im allgemeinen bei 5 g bis 5 kg Aktivsubstanz (AS) der Formeln I und II je ha; bevorzugt bei 10 g bis 2 kg AS/ha, insbesondere bevorzugt bei 20 g bis 600 g AS/ha.

Die Formulierungen, d.h. die den Wirkstoff der Formeln I und II und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethylenglykolmonomethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle oder Sojaöl; oder Wasser.

Als feste Trägerstoffe, z.B. für Stäubemittel und dispergierbare Pulver, lassen sich Calcit, Talkum, Kaolin, Montmorillonit oder Attapulgit, hochdisperse Kieselsäure oder saugfähige Polymerisate verwenden. Als gekörnte, adsorptive Granulatträger kommen Bimsstein, Ziegelbruch, Sepiolit oder Bentonit, als nicht-sorptive Träger z.B. Calcit oder Dolomit in Frage.

Als oberflächenaktive Verbindungen kommen je nach Art der zu formulierenden Wirkstoffe der Formeln I und II nichtionogene, kation- und/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u.a. in folgenden Publikationen erschienen:

"Mc Cutcheon's Detergents and Emulsifiers Annual" MC Publishing Corp., Ridgewood New Jersey, 1980

Sisley and Wood, "Encyclopedia of Surface Active Agents", Chemical Publishing Co., Inc. New York, 1980.

Besonders vorteilhafte, applikationsfördernde Zuschlagstoffe sind ferner natürliche oder synthetische Phospholipide aus der Reihe der Kephaline und Lecithine, wie z.B. Phosphatidylethanolamin, Phosphatidylserin, Phosphatidylglycerin, Lysolecithin.

Die agrochemischen Zubereitungen enthalten in der Regel 0,1 bis 99 %, insbesondere 0,1 bis 95 % Wirkstoff der Formel I, 99,9 bis 1 %, insbesondere 99,9 bis 5 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Derartige (agro)chemische Mittel sind ein Bestandteil der vorliegenden Erfindung.

Die nachfolgenden Beispiele dienen der Illustration der Erfindung, wobei "Wirkstoff" ein Gemisch aus "Fenpiclonil" I und der Verbindung II in einem bestimmten Mischungs-Verhältnis bedeutet.

| Spritzpulver | a) | b) | c) |
|---|---|---|---|
| Wirkstoff (I:II = 10:1, 5:2, 1:3) | 25 % | 50 % | 75 % |
| Na-Ligninsulfonat | 5 % | 5 % | |
| Na-Laurylsulfat | 3 % | - | 5 % |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff (I:II = 1:20) | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| Stäubemittel | a) | b) |
|---|---|---|
| Wirkstoff (I:II = 2:3 und 1:1) | 5 % | 8 % |
| Talkum | 95 % | - |
| Kaolin | - | 92 % |

Man erhält anwendungsfertige Stäubemittel, indem der Wirkstoff mit den Träger vermischt und auf einer geeigneten Mühle vermahlen wird.

| Extruder Granulat | |
|---|---|
| Wirkstoff (I:II = 20:1) | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff (I:II = 3:2) | 3 % |
| Polyethylenglykol (MG 200) | 3 % |
| Kaolin | 94 % |
| (MG = Molekulargewicht) | |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

Biologische Beispiele

Ein synergistischer Effekt liegt bei Fungiziden immer dann vor, wenn die fungizide Wirkung der Wirkstoffkombination grösser ist als die Summe aus der Wirkung der einzeln applizierten Wirkstoffe.

Die zu erwartende Wirkung E für eine gegebene Wirkstoff-Kombination, z.B. zweier Fungizide, gehorcht der sogenannten COLBY-Formel und kann wie folgt berechnet werden, (COLBY, LR. "Calculating synergistic and antagonistic responses of herbicide combination". Weeds 15, Seiten 20-22.2) (LIMPEL and al., 1062 "Weeds control by ... certain combinations". Proc. NEWCL, Vol. 16, pp. 48-53):

(g AS/hl= Gramm Aktivsubstanz je Hektoliter Spritzbrühe)

X = % Wirkung durch Fungizid I bei p g AS/ha

Y = % Wirkung durch Fungizid II bei q g AS/ha

E = die erwartete Wirkung der Fungizide I+II bei p+q g AS/ha

Aufwandmenge (additive Wirkung),

dann ist nach Colby: $E = X + Y - \frac{X \cdot Y}{100}$

Wenn die tatsächlich beobachtete Wirkung (O) grösser ist als die berechnete, so ist die Kombination in ihrer Wirkung überadditiv, d.h. es liegt ein synergistischer Effekt vor.

Fungizide Wirkung gegen saatbürtige Septoria nodorum auf Winterweizen

Die mit Septoria nodorum infizierte Weizensaat (Sorte "Moleson") wird vom Feld geerntet. Der Malz-Agar-Test ergibt, dass die Saat zu 53 % infiziert ist. Diese Saat wird mit Mischungen der Aktivsubstanzen wie in der folgenden Tabelle gezeigt behandelt. Zwecks einheitlicher Behandlung werden die Aktivkomponenten zunächst im Wasser dispergiert und dann auf das auf einem rotierenden Bett befindliche Saatgut gespritzt. Diese Arbeitsweise entspricht der üblichen Standardanwendung.

Das behandelte Saatgut wird in Ackererde ausgesät. Die Ackererde wird in Schalen der Grösse: Tiefe 11 cm; Länge 40 cm, Breite 30 cm vorgelegt. Jeweils 100 Körner werden pro Schale eingesetzt und für jede Kombination werden drei Parallelversuche angesetzt.

Die Wirksamkeit der einzelnen Produkte wird unter Anwendung der von Holmes und Colhoun veröffentlichten Methode ermittelt (S.J.I. Holmes and J. Colhoun: "A method for assessing the efficacy of seed infectants for the control of seed-borne Septoria nodorum on wheat". Annals of Applied Biology 75 pp. 225-232, 1973).

Die Schalen werden nach der Aussaat während zwei Wochen unter Ausschluss von Licht bei 8-10°C gehalten, dann werden sie in ein Gewächshaus gestellt und dort bei 20°C während weiterer zwei Wochen gehalten. Anschliessend werden die Sämlinge aus der Erde genommen und gewaschen. Der Schädigungsgrad auf diesen Pflanzen wird mit dem Ausmass des Pilzbefalls an unbehandelten Kontrollpflanzen verglichen.

Tabelle

| Behandlung Nr. | g Aktivsubstanz/ 100 kg Saatgut Komponente I | Komponente II | Pilz-befall (%) | Wirkung E (berechnet) (%) (COLBY) | Wirkung O (gefunden) (%) |
|---|---|---|---|---|---|
| 1. Vergleich | - | - | 100 | - | - |
| 2. | 1 | - | 88 | - | 12 |
| 3. | 2 | - | 87 | - | 13 |
| 4. | 5 | - | 65 | - | 35 |
| 5. | 10 | - | 54 | - | 46 |
| 6. | - | 1 | 60 | - | 40 |
| 7. | - | 2 | 44 | - | 56 |
| 8. | - | 5 | 25 | - | 75 |
| 9. | | 10 | 17 | - | 83 |
| 10. | 1 | 1 | 44 | 47 | 56 |
| 11. | 1 | 2 | 32 | 62 | 68 |
| 12. | 1 | 5 | 20 | 78 | 80 |
| 13. | 1 | 10 | 13 | 85 | 87 |
| 14. | 2 | 1 | 41 | 48 | 59 |
| 15. | 2 | 2 | 28 | 62 | 72 |
| 16. | 5 | 1 | 36 | 60 | 64 |
| 17. | 5 | 2 | 21 | 71 | 79 |
| 18. | 10 | 1 | 21 | 68 | 79 |
| 19. | 10 | 2 | 19 | 77 | 81 |
| 20. | 10 | 5 | 10 | 87 | 90 |
| 21. | 10 | 10 | 5 | 91 | 95 |

Wie aus der Tabelle ersichtlich ist, weisen die Behandlungen Nr. 10-21 bei welchen die Komponenten I und II in einem breiten Bereich der Mischungsverhältnisse variiert wurden, eine gesteigerte, d.h. synergistische Wirkung auf.

Aehnlich gesteigerte, d.h. synergistische Wirkung zeigt sich gegen Schneeschimmel (Gerlachia nivalis) auf Weizen, Gerste und Roggen, gegen Pyrenophora graminea und P. teres auf Gerste, gegen Tilletia caries auf Weizen gegen Ustilago auf Gerste sowie gegen andere samen- und bodenbürtige Pathogene.

## Patentansprüche

1. Pflanzenmikrobizides Mittel enthaltend mindestens zwei Wirkstoff-Komponenten, dadurch gekennzeichnet, dass die Komponente I) 3-Cyano-4-(2,3-dichlorphenyl)-pyrrol der Formel I

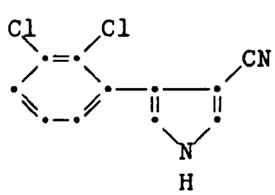

(I)

und die andere Komponente II) 1-(1H-1,2,4-Triazol-1-yl)-2-methoxy-2-[4-(4-chlorphenoxy)-2-chlorphenyl]-butan

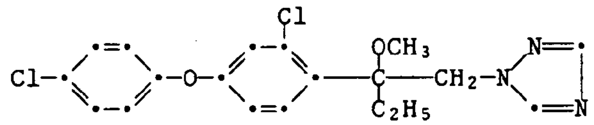

(II)

oder eines ihrer Salze ist, zusammen mit geeigneten Trägerstoffen.

2. Mittel gemäss Anspruch 1, dadurch gekennzeichnet, dass das Gewichtsverhältnis I:II = 20:1 bis 1:20 beträgt.

3. Mittel gemäss Anspruch 2, dadurch gekennzeichnet, dass das Gewichtsverhältnis I:II = 5:1 bis 1:5 beträgt.

4. Verfahren zur Bekämpfung oder Verhütung von Pflanzenkrankheiten, dadurch gekennzeichnet, dass man in beliebiger Reihenfolge oder gleichzeitig die durch Infektion befallene oder gefährdete Stelle der Pflanze mindestens mit einem Wirkstoff der Formel I und einem Wirkstoff der Formel II gemäss Anspruch 1 behandelt.

5. Verfahren gemäss Anspruch 4, dadurch gekennzeichnet, dass das Saatgut behandelt wird.

## Claims

1. A plant-microbicidal composition comprising at least two active ingredient components, wherein component I) is 3-cyano-4-(2,3-dichlorophenyl)-pyrrole of formula I

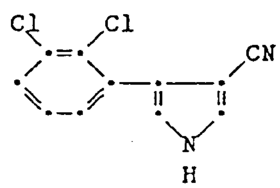

(I)

and the other component II) is 1-(1H-1,2,4-triazol-1-yl)-2-methoxy-2-[4-(4-chlorophenoxy)-2-chlorophenyl]-butane

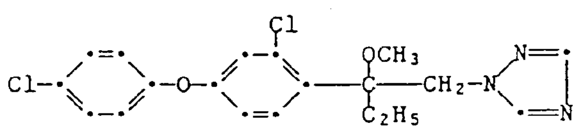

(II),

or a salt thereof, together with suitable carriers.

2. A composition according to claim 1, wherein the weight ratio of I:II is 20:1 to 1:20.

3. A composition according to claim 2, wherein the weight ratio of I:II is 5:1 to 1:5.

4. A method of controlling or preventing plant diseases, which comprises treating the plant locus which is already infected, or is liable to be infected, in any order or simultaneously, with at least one compound of formula I and at least one compound of formula II according to claim 1.

5. A method according to claim 4, which comprises treating the seed.

## Revendications

1. Agent microbicide pour les plantes contenant au moins deux composants actifs, caractérisé en ce que le composant I) est le 3-cyano-4-(2,3-dichlorophényl)pyrrol de formule I :

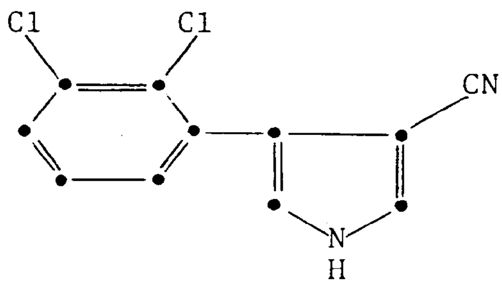

(I)

et le composant II) est le 1-(1H-1,2,4-triazol-1-yl)-2-méthoxy-2-[4-(4-chlorophénoxy)-2-chlorophényl]-butane

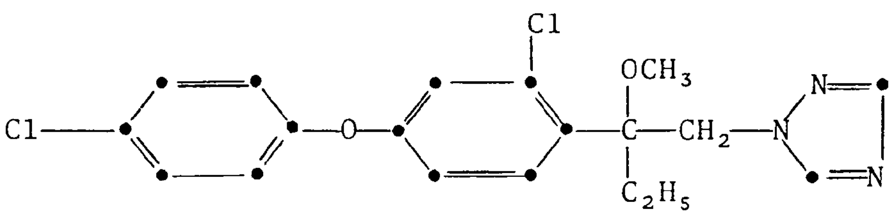

(II)

ou un de leurs sels, associés à des supports appropriés.

2. Agent selon la revendication 1, caractérisé en ce que le rapport pondéral I:II est compris entre 20:1 et 1:20.

3. Agent selon la revendication 2, caractérisé en ce que le rapport pondéral I:II est compris entre 5:1 et 1:5.

4. Procédé pour lutter contre ou pour prévenir les maladies des plantes, caractérisé en ce que l'on traite l'endroit où se trouve la plante, atteint par l'infection ou exposé à l'infection, au moins avec une substance active de formule I et une substance active de formule II selon la revendication 1, dans un ordre quelconque.

5. Procédé selon la revendication 4, caractérisé en ce que l'on traite les semences.